# DEMANDE DE BREVET EUROPEEN

(11) **EP 2 933 759 A1**
(43) Date de publication de la demande: **21.10.2015**
(21) Numéro de dépôt: 14305587.9
(22) Date de dépôt: 18.04.2014
(51) Int. Cl.: G06K 19/07, G06K 19/077

(54) **Procédé de fabrication d'un dispositif à circuit électronique/électrique**

(71) Demandeur: Gemalto SA, 92190 Meudon (FR)
(72) Inventeur: Dauphin, François, 13705 La Ciotat (FR); Depoutot, Frédéric, 13705 La Ciotat (FR)

(57) **Abrégé**

L'invention concerne un procédé de fabrication d'un dispositif électronique (1A, 1B) comportant un circuit électronique / électrique (4), caractérisé en ce qu'il comprend les étapes suivantes :
- formation d'un corps-support (C) comportant une batterie (6) à l'intérieur,
- réalisation d'une cavité (3) débouchant à la surface (10) du corps-support, ladite cavité révélant des bornes de connexion (11) de la batterie,
- connexion d'un circuit électronique / électrique(4) à la batterie située dans ladite cavité,
- échange de données dans le circuit électronique /électrique (4) par contact électrique.

L'invention concerne également le dispositif électronique correspondant.

## Description

### Domaine de l'invention.

L'invention concerne un procédé de fabrication d'un dispositif électronique intégrant un circuit électronique / électrique enfoui dans un corps du dispositif et mettant en oeuvre une étape d'échange de données avec le dispositif enfoui.

L'invention vise principalement des dispositifs à afficheur ou à module d'affichage tels des cartes à puce notamment bancaire, mettant en oeuvre un affichage d'une information variable en fonction du temps donné par une base de temps alimentée disponible dans le dispositif.

### Art antérieur.

On connaît déjà des cartes comportant une batterie intégrée, de manière que la carte puisse assurer diverses fonctions nécessitant une source d'énergie interne, permettant d'assurer le fonctionnement des divers composants ou modules électroniques indépendamment de toute connexion, matérielle ou non, avec une source d'énergie externe. Une telle batterie peut aussi, par exemple, suppléer à une insuffisance d'énergie dans la cas d'une connexion immatérielle, par couplage électromagnétique, par exemple dans le cas des cartes dites « sans contact » où on utilise une antenne intégrée à la carte pour transmettre à la fois l'énergie nécessaire au fonctionnement de la carte et les informations échangées entre la carte et un lecteur de carte.

En particulier, il est connu d'intégrer dans une carte à puce des moyens d'affichage, destinés par exemple à l'affichage d'un mot de passe à usage unique (connu sous l'acronyme OTP pour One Time Password) ou d'une valeur de vérification (dCVV pour dynamic Code Verification Value).

Un procédé connu de fabrication de cartes comportant un écran d'affichage consiste à assembler sur un même substrat les divers composants électroniques de la carte, tels qu'un afficheur, une batterie, un microcontrôleur, etc. et à insérer le module ainsi formé dans une cavité formée dans un corps de carte. Puis de la résine est injectée pour combler les espaces libres entre les composants, et entre les composants et les bords de la cavité, et des feuilles de surface sont disposées de part et d'autres du corps et laminées avec celui-ci pour assurer leur assemblage final, en intégrant ainsi dans le corps et entre les couches de surface le dit module électronique et ses composants.

Dans les procédés connus de fabrication de carte à puce multi composant, le circuit électronique peut être relié à une interface de communication électrique avec l'extérieur via un module à contact ISO 7816 type carte à puce, ou via une interface sans contact à antenne radiofréquence. Ce procédé permet d'échanger des données après assemblage pour personnaliser, programmer et/ou tester, régler électriquement le circuit électronique.

Toutefois, le recours à une interface de communication électrique via le module à contacts ISO 7816 présente l'inconvénient de nécessiter un circuit imprimé plus complexe à réaliser et à intégrer. Et le recours à une communication radiofréquence requiert notamment une puce sans contact et une antenne radiofréquence qui augmentent le coût de fabrication du dispositif final.

### Problème technique.

L'invention vise à résoudre les inconvénients susvisés.

L'invention propose un procédé simple et peu couteux de fabrication d'un dispositif à circuit électronique / électrique enfoui dans un corps du dispositif et nécessitant une étape d'échange de données après avoir été enfoui.

En particulier, l'invention permet de résoudre simplement et économiquement le problème de réglage électrique d'une horloge RTC après incorporation et raccordement d'un module d'affichage à une batterie à l'intérieur d'un dispositif notamment une carte à puce.

### Résumé de l'invention.

A cet effet, l'invention a pour objet Procédé de fabrication d'un dispositif électronique comportant un circuit électronique / électrique. Le procédé se distingue en ce qu'il comprend les étapes suivantes :
- formation d'un corps-support comportant une batterie à l'intérieur,
- réalisation d'une cavité débouchant à la surface du corps-support, ladite cavité révélant des bornes de connexion de la batterie,
- connexion d'un circuit électronique / électrique à la batterie située dans ladite cavité,
- échange de données avec le circuit électronique /électrique par contact électrique.

Selon d'autres caractéristiques du procédé :
- Le circuit électronique / électrique comporte des pistes / bornes électriques d'échange de données s'étendant à l'intérieur de la cavité et pas à l'extérieur;
- Le circuit électronique / électrique comporte des pistes / bornes électriques d'échange de données s'étendant en dehors de la cavité ;
- L'afficheur est inséré dans la cavité et connecté au circuit électronique / électrique après ladite étape d'échange de données ;
- Au moins une portion des pistes / bornes électriques d'échange de données débouchant hors de la cavité sont sectionnées après personnalisation électrique ;
- L'afficheur et le circuit électronique / électrique connectés ensemble sont insérés dans la cavité et connectés à la batterie ;
- Le circuit électronique comprend une horloge à temps réel (HTR) et en ce que l'étape d'échange de données comporte une étape de réglage ou calage horaire de l'horloge.
- Le circuit électronique / électrique présente une surface principale plus étendue par rapport à celle de l'afficheur de manière à laisser lesdites pistes / bornes électriques d'échange de données, accessibles dans la cavité ;
- Un espace (E) situé au dessus des pistes / bornes électriques (13) est comblé par de la matière de remplissage.

L'invention a également pour objet un dispositif correspondant au procédé ci-dessus.

### Brève description des figures.

- La figure 1 illustre une première étape de fourniture / réalisation d'un dispositif conforme à l'invention avec une cavité de réception d'un afficheur électronique comme circuit électrique/électronique;
- La figure 2 illustre une seconde étape de report de circuit électronique de commande d'afficheur dans le dispositif de la figure précédente;
- La figure 3 illustre une troisième étape d'échange de données (personnalisation électrique / calage horaire, test programmation...) avec le circuit électronique de la figure précédente;
- La figure 4 illustre une quatrième étape de report et connexion d'un afficheur au circuit électronique illustré à la figure précédente ;
- La figure 5 illustre une seconde étape d'un mode alternatif montrant un report et connexion d'un afficheur complet (avec circuit de commande y compris circuit d'horloge RTC) à la batterie du dispositif illustré à la figure 1 ;
- La figure 6 illustre une troisième étape du mode alternatif montrant un échange de données (personnalisation électrique / calage horaire / programmation);
- La figure 7 illustre une quatrième étape du mode alternatif montrant une élimination des plages de contact pour l'échange de données (personnalisation électrique / calage horaire, programmation...).
- Les figures 8, 9 et 10 illustrent des étapes d'un troisième mode de mise en oeuvre du procédé de fabrication d'un dispositif électronique selon l'invention.

### Description.

La description qui suit est d'abord relative à un premier mode de mise en oeuvre d'un procédé de fabrication d'un dispositif électronique 1A comportant un afficheur électronique 2.

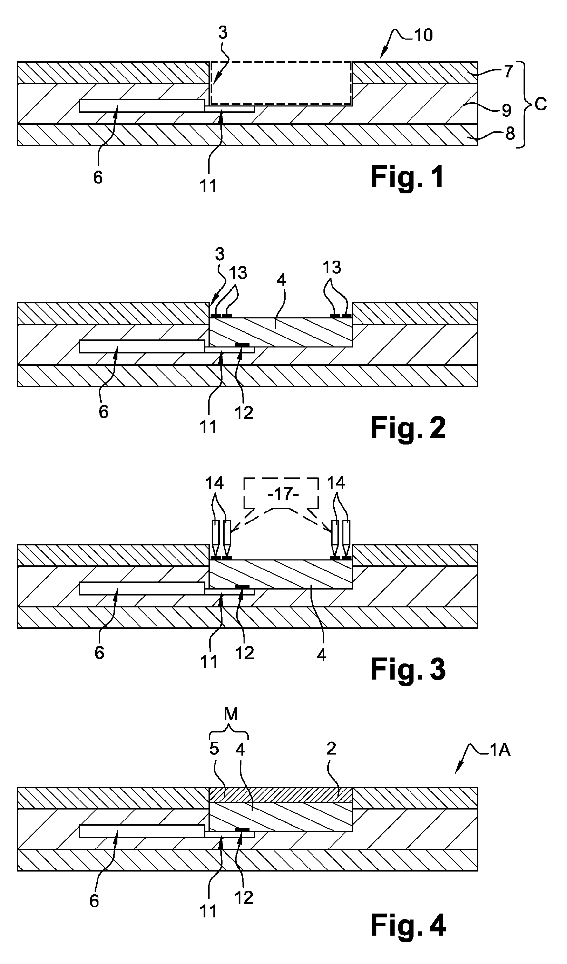

A la figure 1, le procédé comprend une première étape de fourniture / réalisation d'un dispositif 1A conforme à l'invention avec une cavité 3 de réception d'un module M (4, 5) électrique et/ou électronique et avec une batterie 6.

Le dispositif 1A dans l'exemple est une carte à puce et le module électrique / électronique est un module d'affichage ou afficheur électronique M (4, 5). Le dispositif 1A, 1B peut être tout dispositif électronique tel qu'un passeport électronique, une clé USB, un appareil PDA, une carte à mémoire de masse, tout objet comportant une fonction électronique enfouie dans le corps de l'objet.

Le module M (4, 5) enfoui peut être tout module électrique/ électronique tel qu'un module de capture d'empreinte, un capteur de température, un afficheur, etc.

Cette étape est formée notamment en deux temps comprenant la formation d'un corps-support C comportant une batterie à l'intérieur, notamment par lamination de feuilles ou couches polymères et/ou adhésif 7, 8, 9 respectivement pour face avant, pour face arrière et couche centrale.

Alternativement, cette étape peut être réalisée par injection de matière autour d'une batterie 6.

Le procédé comprend également une étape de réalisation d'une cavité 3 débouchant de préférence à la surface arrière 10 du corps-support C, ladite cavité révélant des bornes de connexion 11 de la batterie. Dans l'exemple, après lamination, une cavité 3 est réalisée par usinage jusqu'à révéler les plages / bornes d'interconnexion 11 de la batterie. Ces bornes sont amenées à interconnecter des plages ou bornes correspondantes du module M.

Alternativement, la cavité peut être réalisée au cours du moulage éventuel du corps du dispositif 1A, 1B en un seul temps avec un noyau de moulage correspondant sensiblement aux dimensions de la cavité et ménageant ou réservant la cavité 3. Selon une autre étape subséquente illustrée à la figure 2, ce mode de mise en oeuvre prévoit une connexion d'un circuit électronique 4 à la batterie située dans ladite cavité. Dans l'exemple, on reporte et connecte dans la même opération un circuit électronique 4 dans la cavité alors qu'au préalable des gouttes de colle conductrice anisotropique (non représentées) ont été déposées sur les plages / bornes d'interconnexion 11 de la batterie ou du circuit 4. D'autres modes de connexion peuvent être envisagés comme la technologie ACF (adhésif conducteur anisotropique) ou avec silicone conducteur).

Le module ici présente un encombrement / dimensions comparable / ajusté sensiblement aux dimensions de la cavité. Le circuit électronique est ici un circuit imprimé 4 réalisé sur un substrat fin et flexible inférieur à environ 200 µm. Par exemple, l'épaisseur du substrat flexible peut être égal à environ 110µm.

Le circuit comprend ici au moins une horloge à temps réel (HTR ou RTC). Il peut comprendre toute autre fonction et notamment une fonction de pilotage / commande de l'affichage d'information sur un écran / afficheur.

Ensuite, le procédé comprend une étape d'échange de données (personnalisation, programmation du circuit électronique, calage horaire...) par contact électrique illustrée à la figure 3.

A cet effet, le circuit électronique comporte ici des pistes / plages ou bornes d'interconnexion électrique 13 accessibles qui s'étendent à l'intérieur de la cavité 3 pour effectuer l'échange de données.

Dans l'exemple, comme échange de données, le procédé prévoit au moins une mise à l'heure ou calage de l'horloge après qu'elle soit connectée à la batterie. L'échange de données s'effectue ici de préférence par contact électrique d'aiguilles 14 de transfert de données sur les bornes d'échange de données 13 prévues à cet effet.

Le dispositif 1A peut être déplacé à poste d'échange de données après un poste d'encartage partiel d'une partie du module électronique / électrique.

Selon une caractéristique du procédé conforme au premier mode, illustré à la figure 4, on insère dans la cavité une portion complémentaire 5 du module électronique / électrique M. Dans l'exemple, c'est l'afficheur 5 lui-même (sans l'horloge, la puce de commande / pilotage) qui est inséré dans la cavité et connecté au circuit électronique 4 après ladite étape d'échange de données par contact électrique.

La connexion peut s'effectuer comme précédemment avec de la colle conductrice anisotropique. Toutefois, l'écran peut être généralement connecté au circuit flexible par un autre type d'adhésif conducteur pas nécessairement anisotropique.

Le procédé de l'invention peut également être mis en oeuvre selon une alternative illustrée aux figures 1, 5, 6, 7.

Cette alternative peut avoir en commun les étapes du premier mode illustrées et décrites en relation avec la figure 1.

Cette alternative peut différer par le fait que le circuit électronique / électrique 4 comporte des pistes d'échange de données (transfert, programmation...) 18 s'étendant en dehors de la cavité 3 du dispositif 1B.

Dans l'exemple, le module électronique M est complet et comporte des pistes d'interconnexion / plages de contact 18 qui s'étendent hors de la cavité. Dans l'exemple, le module électronique complet comporte des pistes d'interconnexion / plages de contact 18 qui s'étendent du circuit imprimé 4 lelong de la paroi de la cavité 3 pour émerger à la surface 10 du corps du dispositif. Ces pistes/ bornes conductrice électriquement peuvent se replier de préférence sensiblement à angle droit pour épouser la surface 10 du corps du dispositif. L'invention prévoit de préférence une presse ou un outil de pliage 15 ou de conformation des pistes / bornes pour qu'elles se maintiennent repliées contre la surface externe 10 du dispositif.

Les pistes sont ici portées par un substrat fin mais pourraient se présenter librement sans substrat au moins au niveau des pistes 18 d'échange de données. Les bornes ou pistes 18 sont orientées vers l'extérieur quand elles sont pliées à plat contre la surface 10 du corps de dispositif à l'aide de la presse ou outil de pliage 15.

Comme indiqué, dans l'exemple, le module électronique / électrique M est complet pour l'encartage comparativement au mode précédent (c'est-à-dire que dans l'exemple, les parties 4 et 5 sont déjà pré-assemblées et pré-connectées ensemble. Ce module M aurait pu être encarté en deux parties comme dans le premier mode. Ici le circuit électronique 4 comprend au moins l'horloge HTR et est fixé à l'afficheur 5. Le module M peut comprendre aussi une puce de circuit intégré (non représentée) pour la commande / pilotage de l'écran / afficheur ainsi que l'écran lui-même.

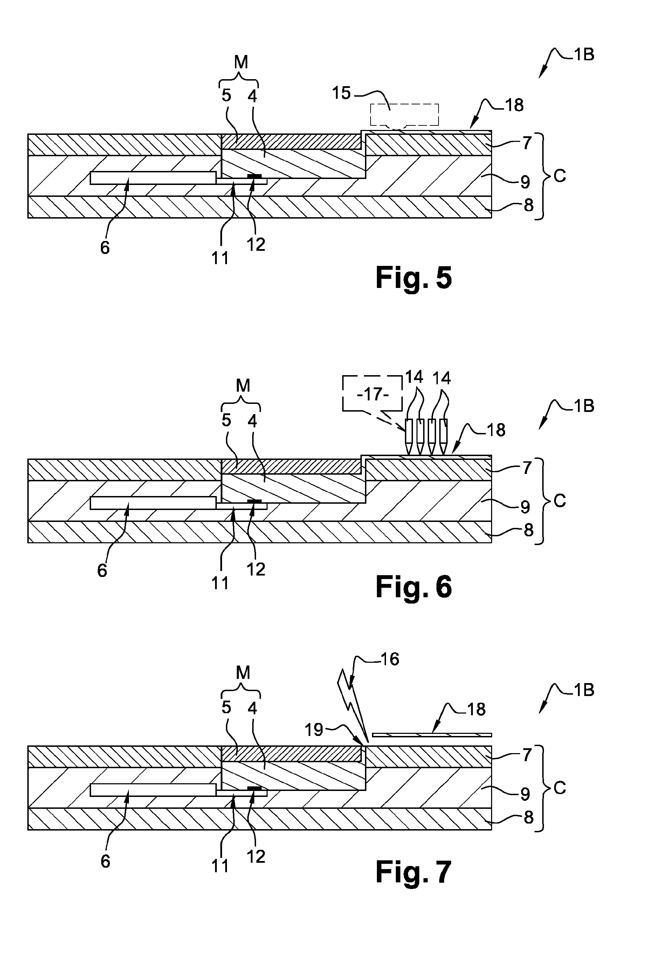

A la figure 6, le procédé prévoit l'étape de d'échange de données comme précédemment avec des aiguilles électriques d'échange de données 14 d'un poste d'échange de données 17, venant au contact des bornes 18 alors que ces dernières sont disposées à la surface du dispositif.

Selon une variante de réalisation, le procédé peut prévoir d'éliminer au moins une portion des pistes électriques d'échange de données 18 débouchant hors de la cavité 3 après que l'échange des données soit terminé.

Dans l'exemple, les portions de pistes sont sectionnées par faisceau laser 16 le long du bord de l'interface 18 située entre la cavité et le module.

Selon une variante avantageuse, les pistes 18 sont maintenues fixes à l'extérieur et peuvent former au moins une partie d'un bornier de plages de contact standard notamment ISO 7816. Les pistes peuvent être collées sur la surface du corps après avoir été rabattues par l'outil 15. Ces dispositions évitent notamment d'avoir à connecter un module à contacts à un circuit imprimé multi composant et à réaliser deux cavités (une pour le module ISO 7816 et une pour un afficheur).

En variante de réalisation, les pistes et/ ou le substrat des pistes 18 comprennent une prédécoupe ou fragilisation située au plus proche de la cavité 3 par exemple proche de l'interface 18 ou de préférence plus profond dans la cavité. Ainsi, après échange de données, programmation, test, réglage ou autre, les pistes / bornes sont sectionnées par simple traction sur les pistes et le bord de découpe des pistes / bornes se situe dans la cavité de manière invisible.

L'invention peut prévoir de combler l'interstice pouvant exister au niveau de l'interface 18 (entre le module et la paroi de cavité) laissé par l'élimination des pistes d'interconnexion 18 de manière à masquer ou isoler de l'extérieur les pistes 18 ainsi sectionnées au niveau de l'interface 19 (ou plus profondément dans la cavité). Le comblement peut s'effectuer par jet de matière isolante assisté par VAO (vision assistée par ordinateur) ou par exemple dépôt de matière insérable par capillarité.

Le cas échéant, l'invention peut prévoir, sur au moins la face du corps présentant le module, d'ajouter une ou plusieurs couche(s) de couverture. Ces couches peuvent être transparentes ou translucides au moins au niveau de l'écran d'affichage.

Ainsi, le dispositif peut fabriquer à moindre coût un objet comportant un circuit électrique / électronique à personnaliser après enfouissement dans le corps du dispositif.

Ainsi par exemple, il n'est pas nécessaire de disposer dans le dispositif d'une interface de communication sans contact notamment radiofréquence (antenne et puce radiofréquence) qui aurait permis une personnalisation électrique après encartage et connexion du circuit à la batterie.

Dans le cas d'une carte à puce bancaire, comportant un module à puce de circuit intégré et plages de contact électriques standard (ISO 7816), il est possible d'ajouter, dans la zone prévue pour un numéro CVV, un afficheur de taille réduite sans autre interaction ou modification de la carte à puce que l'ajout d'une batterie. L'afficheur peut présenter une surface d'une dimension d'environ 3 x 3 mm visible en surface externe principale de la carte bancaire.

L'écran 5 peut être du type papier électronique, bistable de préférence. L'écran peut être de type « Kindle » de la « société Amazon ». Il comprend de petites billes bicolores qui s'orientent côté blanc ou côté noir en fonction du champ électrique.

Le circuit électronique comprend dans les exemples, une puce comportant une horloge temps réel (HTR ou RTC) notamment à cristal quartz.

Ainsi, l'invention permet de disposer à coût réduit d'un objet comportant une fonction de CVV dynamique en fonction du temps ou d'une fonction OTP (One time pass word) pour générer un numéro à usage unique ou mot de passe. L'écran peut avoir une dimension plus importante et/ou être disposé sur la face principale avant de l'objet.

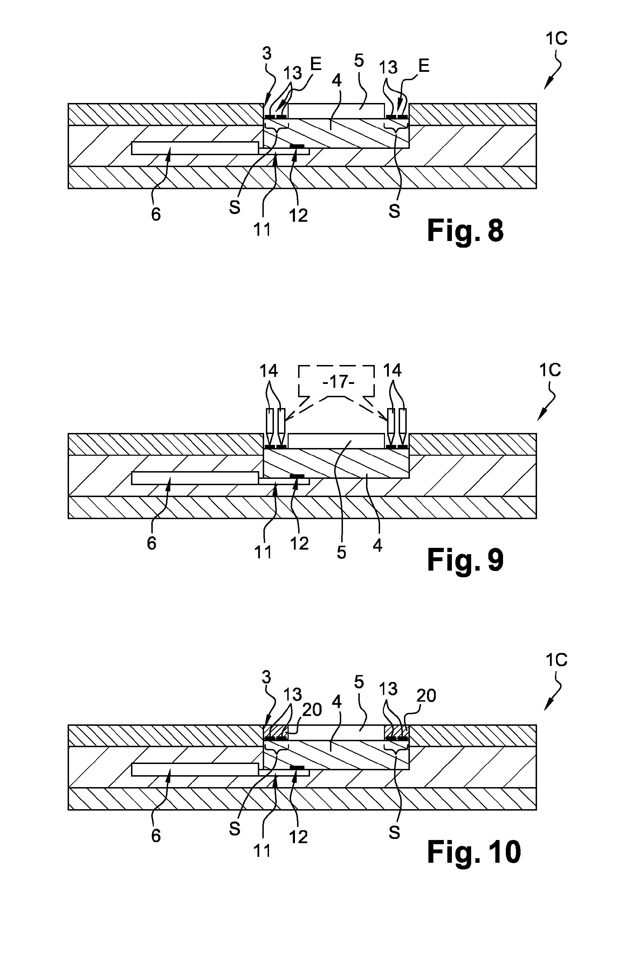

On va décrire maintenant un troisième mode de mise en oeuvre du procédé de fabrication d'un dispositif électronique en relation avec les figures 8, 9 et 10.

A la figure 8, est illustrée une étape d'assemblage du module M dans la cavité. Le circuit électronique / électrique 4 présente une surface principale plus étendue par rapport à celle de l'afficheur de manière à laisser une surface du circuit comportant les pistes / bornes électriques d'échange de données (13), accessibles dans la cavité. Alternativement, on peut avoir une surface du circuit 4 comportant les pistes / bornes électriques d'échange de données 13, accessibles dans la cavité et dépassant latéralement du bord de l'afficheur. Dans l'exemple, l'afficheur est sensiblement centré sur la surface du circuit 4 de manière à laisser les pistes / bornes (13) en bordure de l'afficheur.

Comme précédemment, l'afficheur peut être de préférence assemblé préalablement à l'insertion et connexion de l'ensemble M à la batterie. Cela permet ainsi d'utiliser un procédé traditionnel d'encartage basé sur la pression et la température car il n'y a pas de contact avec l'écran ni de pression exercée dessus. L'encartage s'effectue en maintenant la pression sur la zone du circuit non couverte par l'écran 5 (ou afficheur).

Accessoirement, dans tous les modes où le circuit 5 et bornes de connexion 12 de la batterie sont accessibles dans la cavité, il est possible de réaliser la connexion entre le circuit et la batterie par thermo compression ou par ultrasons également à travers le substrat du circuit 4 (les bornes de connexion ou d'interconnexion du circuit à la batterie peuvent être situés à l'aplomb de la rainure autour de l'afficheur).

A la figure 9 est illustrée l'étape d'échange de données avec le circuit électronique /électrique (4) par contact électrique.

Les aiguilles de transferts électriques peuvent accéder librement aux pistes/bornes électriques d'échange de données (13) disposées à l'intérieur de la cavité, puisqu'elles ne sont pas couvertes par l'afficheur 5. On peut effectuer notamment une programmation (ou initialisation et pré-personnalisation).

A la figure 10 est illustrée une étape de comblement de l'espace existant au dessus des pistes/bornes 13.

Selon une caractéristique de ce troisième mode, l'espace est comblé par de la matière de remplissage. On peut masquer les pistes/bornes 13 par procédé d'impression de type jet d'encre, jet de matière ou en fixant une étiquette pré-imprimée.

La zone ou espace (E) masquée présente de préférence une géométrie en forme de cadre autour de l'afficheur. Ce cadre présente des dimensions extérieures (Lxl) sensiblement inférieures à celles (L'xl') de la cavité 3. Le cadre présente des dimensions inférieures suffisantes pour lui permette de couvrir toute la zone ou espace (E) située autour de l'afficheur 5 et dans la cavité 3.

Il n'y a pas nécessairement de chevauchement du masquage ou de la matière de remplissage sur le bord de l'écran ou sur le bord de la cavité, mais le masquage ou la matière de remplissage peut affleurer ces bords ou laisser un très léger interstice.

L'étiquette pré-imprimée peut être réalisée suivant les procédés classiques de fabrication d'étiquette : convoyage en rouleau pour les étapes d'impression puis découpe et report dans la cavité 3.

La fixation peut être effectuée avec un adhésif à froid (PSA : pressure sensitive adhesive) ou réticulable à chaud.

## Revendications

1. Procédé de fabrication d'un dispositif électronique (1A, 1B) comportant un circuit électronique / électrique (4), **caractérisé en ce qu'**il comprend les étapes suivantes :
- formation d'un corps-support (C) comportant une batterie (6) à l'intérieur,
- réalisation d'une cavité (3) débouchant à la surface (10) du corps-support, ladite cavité révélant des bornes de connexion (11) de la batterie,
- connexion d'un circuit électronique / électrique(4) à la batterie située dans ladite cavité,
- échange de données avec le circuit électronique /électrique (4) par contact électrique.

2. Procédé selon la revendication précédente, **caractérisé en ce que** le circuit électronique / électrique (4) comporte des pistes / bornes électriques d'échange de données (13) s'étendant à l'intérieur de la cavité.

3. Procédé selon la revendication précédente, **caractérisé en ce que** le circuit électronique / électrique (4) comporte des pistes / bornes électriques d'échange de données (18) s'étendant en dehors de la cavité.

4. Procédé selon l'une des revendications précédentes, **caractérisé en ce que** l'afficheur (5) est inséré dans la cavité et connecté au circuit électronique / électrique (4) après ladite étape d'échange de données.

5. Procédé selon la revendication 3, **caractérisé en ce qu'**au moins une portion des pistes / bornes électriques d'échange de données (18) débouchant hors de la cavité sont sectionnées après personnalisation électrique.

6. Procédé selon la revendication 1 ou 3, **caractérisé en ce que** l'afficheur (5) et le circuit électronique / électrique (4) connectés ensemble sont insérés dans la cavité et connectés à la batterie (6).

7. Procédé selon l'une des revendications précédentes, **caractérisé en ce que** le circuit électronique / électrique (4) comprend une horloge à temps réel (HTR) et **en ce que** l'étape d'échange de données comporte une étape de réglage ou calage horaire de l'horloge.

8. Procédé selon l'une des revendications précédentes, **caractérisé en ce que** le circuit électronique / électrique (4) présente une surface principale plus étendue par rapport à celle de l'afficheur de manière à laisser lesdites pistes / bornes électriques d'échange de données (13), accessibles dans la cavité.

9. Procédé selon l'une des revendications précédentes, **caractérisé en ce qu'**un espace (E) situé au dessus des pistes / bornes électriques (13) est comblé par de la matière de remplissage (20).

10. Dispositif électronique (1A, 1B) comportant un circuit électronique / électrique (4), **caractérisé en ce qu'**il comprend :
- un corps-support (C) comportant une batterie (6) à l'intérieur,
- une cavité (3) débouchant à la surface (10) du corps-support, ladite cavité donnant accès à des bornes de connexion (11) de la batterie,
- un circuit électronique / électrique (4) connecté à la batterie située dans ladite cavité,
- des pistes / bornes électriques (13) du circuit électronique /électrique (4) pour un échange de données avec le circuit électronique /électrique, lesdites pistes / bornes étant enfouies sous la surface 10 du corps-support.
